# EUROPEAN PATENT APPLICATION

(11) **EP 3 085 713 A1**
(43) Date of publication of application: **26.10.2016**
(21) Application number: 16162631.2
(22) Date of filing: 29.03.2016
(51) Int. Cl.: C08F 220/14, C08L 33/14

(54) **CO2 ABATING LATEX COATING COMPOSITION**

(30) Priority: 21.04.2015 US 201562150548 P
(71) Applicant: ROHM AND HAAS COMPANY, Philadelphia, PA 19106-2399 (US)
(72) Inventor: CONNER, DAVID, COLLEGEVILLE, PA Pennsylvania 19426 (US); DOMBROWSKY, GARY W., COLLEGEVILLE, PA Pennsylvania 19426 (US); MAURICE, ALVIN M., COLLEGEVILLE, PA Pennsylvania 19426 (US)
(74) Representative: Mauro, Marina Eliana

(57) **Abstract**

The present invention relates to a composition, an aqueous dispersion of polymer particles functionalized with acetoacetoxyethyl groups and a CO₂ abating additive, which is a high boiling non-hindered primary amine. The composition is useful for CO₂ abatement in acetoacetoxy functionalized latexes compositions.

## Description

### Background of the Invention

The present invention relates to a CO₂ abating latex coating composition, more particularly, an aqueous dispersion of polymer particles functionalized with acetoacetoxyethyl groups and a CO₂ abating additive. Post film-forming curing of latex films is desirable to achieve improved hardness, as well as chemical-, scrub-, dirt-pickup-, and print resistance in the final coating. To that end, the use of polymeric binder particles functionalized with acetoacetoxyethyl methacrylate (AAEM) has been a mainstay for ambient cure of architectural coatings. AAEM has relatively low toxicity and undergoes oxidative crosslinking efficiently to provide an excellent balance of properties in the final coating.

This favorable outcome comes with an undesired side effect, however: The reactive acetoacetoxy groups hydrolyze during latex storage to liberate carbon dioxide, thereby causing undesirable and potentially catastrophic pressure buildup within the storage vessel. This pressure buildup can be mitigated using ammonia but it too has its drawbacks: Ammonia imparts a strong odor and often causes yellowing in the final coating; moreover, formulators face ever-increasing regulatory pressure to remove ammonia and other volatile amines from their paint formulations. It has also been found that ammonia, which is thought to stabilize AAEM in the enamine form, does not actually prevent the formation of CO₂. (J. Coat. Technol. Res., 10(6), 821-828, 2013). Accordingly, it would be desirable to find an economically feasible low VOC alternative for preparing a shelf-stable self-curing coating composition.

### Summary of the Invention

The present invention addresses a need by providing, in a first aspect, a composition comprising a) an aqueous dispersion of acrylic-based polymer particles functionalized with from 1 to 20 weight percent structural units of an acetoacetoxy functionalized monomer, based on the weight of the polymer particles; and b) an additive which is a compound functionalized with 1 to 4 non-hindered primary amine groups and having a boiling point of at least 250 °C and an equivalent molecular weight of not more than 1100 g/mole; wherein the composition comprises a substantial absence of ammonium cation; the mole:mole ratio of non-hindered primary amine groups to structural units of the acetoacetoxy functionalized monomer is from 0.4 to 5, and the pH of the composition is greater than 7. The composition of the present invention is effective for abating CO₂ in latex compositions functionalized with structural units of an acetoacetoxy containing monomer such as AAEM.

In a second aspect, the present invention is a process for forming a CO₂ abating composition comprising the step of contacting an aqueous dispersion of acrylic-based polymer particles comprising 1 to 20 weight percent structural units of an acetoacetoxy functionalized monomer, based on the weight of the polymer particles, with an additive which is a compound functionalized with 1 to 4 non-hindered primary amine groups and having a boiling point of at least 250 °C and an equivalent molecular weight of not more than 1100 g/mole to form a CO₂ abating composition; wherein substantially no ammonia or a generator of ammonia is added in the step.

### Detailed Description of the Invention

In a first aspect, the present invention is a composition comprising a) an aqueous dispersion of acrylic-based polymer particles functionalized with from 1 to 20 weight percent structural units of an acetoacetoxy functionalized monomer, based on the weight of the polymer particles; and b) an additive which is a compound functionalized with 1 to 4 non-hindered primary amine groups and having a boiling point of at least 250 °C and an equivalent molecular weight of not more than 1100 g/mole; wherein the composition comprises a substantial absence of ammonium cation; the mole:mole ratio of non-hindered primary amine groups to structural units of the acetoacetoxy functionalized monomer is from 0.4 to 5, and the pH of the composition is greater than 7.

As used herein, the term "structural unit" of the named monomer refers to the remnant of the monomer after polymerization. For example, a structural unit of methyl methacrylate is illustrated: 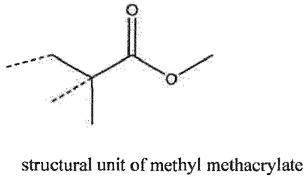 where the dotted lines represent the points of attachment of the structural unit to the polymer backbone. Similarly, a structural unit of acetoacetoxyethyl methacrylate is represented as follows:

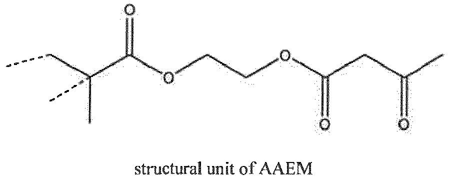

The term "acrylic-based polymer particles" is used herein to refer to polymer particles that comprise at least 30 weight percent, based on the weight of the polymer particles, structural units of one or more methacrylate monomers such as methyl methacrylate and ethyl methacrylate, and/or one or more acrylate monomers such as ethyl acrylate, butyl acrylate, 2-propylheptyl acrylate, and 2-ethylhexyl acrylate. The acrylic-based polymer particles may also include structural units of acid monomers such as acrylic acid, methacrylic acid, and itaconic acid, as well as other non-acrylate or methacrylate monomers such as styrene, sulfur acid monomers such as 4-vinylbenzenesulfonic acid or a salt thereof, and phosphorus acid monomers such as phosphoethyl methacrylate or a salt thereof.

As used herein, an acetoacetoxy functionalized monomer is a monomer capable of copolymerizing with an acrylate or methacrylate under emulsion polymerization conditions to form a copolymer comprising acetoacetoxy functionality. Preferred acetoacetoxy functionalized monomers are acetoacetoxy-C₁-C₄-alkyl acrylates, methacrylates, and acrylamides, examples of which include AAEM, acetoacetoxyethyl acrylate, acetoacetoxyethyl acrylamide, acetoacetoxyethyl methacrylamide, acetoacetoxypropyl acrylate, acetoacetoxypropyl methacrylate, acetoacetoxybutyl acrylate, and acetoacetoxybutyl methacrylate, with AAEM being preferred. Preferably, the aqueous dispersion of acrylic based polymer particles comprises from 1 to 15, more preferably from 1 to 10 weight percent structural units of an acetoacetoxy functionalized monomer, more preferably AAEM.

The term "equivalent molecular weight" is used herein to refer to the molecular weight of the additive divided by the number of amine groups per molecule. Preferably, the equivalent molecular weight of the additive is not greater than 500 g/mole, more preferably from 100 to 500 g/mole.

As used herein, the term "substantial absence of ammonium cation" means that the composition comprises less than that concentration of ammonium cation, arising from the addition of ammonia or a generator of ammonia (for example, NH₄OH or NH₄HCO₃), that would be required to bring the pH of the composition to greater than 7, more preferably to greater than 6, in the absence of the additive. Preferably, the composition comprises not greater than 0.1, more preferably not greater than 0.01, more preferably not greater than 0.001, and most preferably 0 moles of ammonium cation per mole of amine group in the additive.

As used herein, the term "non-hindered primary amine" refers to a primary amine that is bonded to a secondary or tertiary carbon atom, but not a quaternary carbon atom. Preferably, the non-hindered primary amine is water miscible, more preferably a water-miscible liquid: That is, the non-hindered primary amine more preferably is a liquid that forms a single phase with water in the proportions used. Examples of suitable water-miscible primary amines are water-miscible polyetheramines, which are compounds that contain one or more of the following functional group: 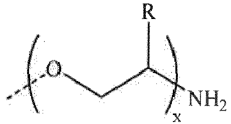 where each R is independently H or methyl; and x is 2 to 22. Preferred polyetheramines are mono-, di-, tri-, or tetrafunctional polyetheramines, more preferably mono-, di-, or trifunctional polyetheramines.

An example of a subclass of polyethermonoamines is represented by the following structure: 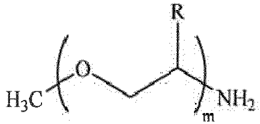 where each R is independently H or methyl and m is from 5 to 22, with the proviso that the equivalent molecular weight does not exceed 1100 g/mole.

Examples of subclasses of polyetherdiamines are represented by the following structures: 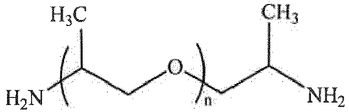 where n is from 2 to 40, more preferably to 20, and most preferably to 7; and 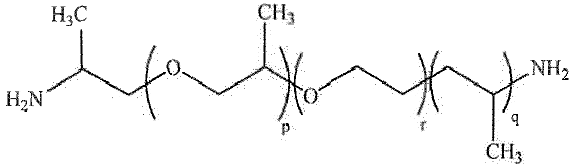 where p + q is from 1 to 6, and r is from 2 to 13.

An example of a subclass of polyetheraminetriamines is represented by the following structure: 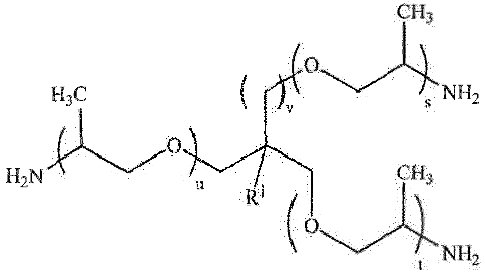 where s + t + u = 3 to 40, more preferably to 20, and most preferably to 10; v is 1 or 2; and R¹ is H, methyl, or ethyl.

Examples of other suitable water-miscible primary amines include 3,3'-(ethane-1,2-diylbis(oxy))bis(propan-1-amine); 4,9-dioxadodecane-1,12-diamine; 4,9-dioxadodecane-1,12-diamine; 4,7-dioxadodecane-1,10-diamine; and 4,7,10-trioxatridecane-1,13-diamine. Commercial examples of suitable polyetheramines are JEFFAMINE D-230, D-400, D-2000, M-600, M-1000, ED-600, ED-900, T-403, and T-3000 polyetheramines.

The aqueous dispersion of the acetoacetoxy functionalized copolymer particles (the latex) are advantageously blended with the additive to make the composition; preferably the mole:mole ratio of the primary amine groups in the additive to the structural units of the acetoacetoxy monomer is from 0.6 to 2. The pH of the composition is preferably at least 7.5, more preferably at least 8.0; and preferably not more than 11.

In a second aspect, the present invention is a process for forming a CO₂ abating composition comprising the step of contacting an aqueous dispersion of acrylic-based polymer particles comprising 1 to 20 weight percent structural units of an acetoacetoxy functionalized monomer, based on the weight of the polymer particles, with an additive which is a compound functionalized with 1 to 4 non-hindered primary amine groups; and having a boiling point of at least 250 °C and an equivalent molecular weight of not more than 1100 g/mole to form a CO₂ abating composition; wherein substantially no ammonia or a generator of ammonia is added in the step. As used herein, the term "substantially no ammonia or generator of ammonia" means that the amount of ammonia or generator of ammonia (e.g., NH₄OH or NH₄HCO₃) that is added is less than the amount that would be required to bring the pH of the composition to greater than 7, more preferably to greater than 6, in the absence of the additive. Preferably, not greater than 0.1, more preferably not greater than 0.01, more preferably not greater than 0.001, and most preferably 0 moles of ammonia or generator of ammonia is added per mole of additive.

The composition of the present invention is useful in coatings formulations and is advantageously combined with one or more of the following materials: pigments, such as TiO₂ and opaque polymers; defoamers; surfactants; dispersants; rheology modifiers; coalescents; and neutralizing agents.

### Examples

### Intermediate 1 - Synthesis of AAEM-containing Binder

A first monomer emulsion (ME1) was prepared by first mixing together deionized water (144.6 g), RHODAFAC™ RS-610/A25 surfactant (34.9 g), and Polystep B-11 surfactant (5.8 g), then admixing, in the following order, butyl acrylate (349.0 g), methyl methacrylate (419.9 g), allyl methacrylate (4.2 g), and methacrylic acid (3.9 g). A second monomer emulsion (ME2) was prepared by mixing deionized water (304.9 g) with RHODAFAC RS-610/A25 (99.3 g), then admixing, in the following order, butyl acrylate (407.2 g), methyl methacrylate (633.6 g), AAEM (87.3 g), and methacrylic acid (35.1 g).

To a 5-L, four-necked round bottom reactor equipped with a paddle stirrer, a thermometer, nitrogen inlet, and a reflux condenser was added deionized water (1300.0 g) and Polystep B-11 surfactant (0.8 g). The contents of the reactor were heated to 85 °C under N₂ and stirring was initiated. A portion of ME1 (97.0 g) was added, followed by a solution of sodium persulfate (3.8 g) dissolved in deionized water (20 g). After the initial exotherm, the reactor temperature was held at 85 °C for the remainder of the monomer emulsion feeds.

A co-feed solution of sodium persulfate (1.8 g) in deionized water (105.0 g) was fed to the flask over a period of 125 min. After onset of addition of the co-feed, the remainder of ME1 was fed to the reactor over 50 min. Upon completion of addition of ME1, a 45-mL rinse was added to the reactor and the reaction was held at 85 °C for 5 min.

After the 5-min hold, ME2 was fed to the reactor over 70 min, after which time a 30-mL rinse was added to the reactor. The reaction was maintained at 85 °C for 10 min hold before cooling to 65 °C. A promoter solution of ferrous sulfate heptahydrate (0.011 g) in water (20 mL) was prepared and added to the reactor. A solution of 70% aqueous *t*-butyl hydroperoxide (0.84 g) and deionized water (21.1 mL); and a solution of isoascorbic acid (0.64 g) in water (21.3 mL) were fed separately and concurrently to the reactor over 30 min to chase residual monomers.

The reactor was cooled during which time a 10% aqueous solution of potassium carbonate (113 g) was added to the reactor over a period of 3 min. ROCIMA™ BT2S biocide (A Trademark of The Dow Chemical Company or Its Affiliates, 10.3 g) in water (20 mL) was added to the reactor when the reactor temperature dropped below 30 °C. The resulting dispersion was filtered through a 325 mesh screen after the contents were cooled to room temperature. The solids content was found to be 44.7%.

### Heat Age Testing

Aliquots of Intermediate 1 (binder) were combined with the additives below in 1-qt paint cans and mixed until thoroughly dispersed. The primary amines were used at a concentration to increase the pH of the latex to 9.0. Ethomeen sv/25 Fatty Acid (Ethomeen), which is a tertiary amine that was used as for comparison (Comp. 2), could only be added in sufficient quantity to increase the pH to 8.2. The cans were then inverted and accelerated heat aging was conducted in an oven at 60 °C for 14 d. The cans were removed from the oven and then immediately evaluated for signs of pressure build and again after cooling to room temperature. A "pass" for this test indicated that no significant pressure build was observed at elevated or room temperature and that the latex was stable (i.e., did not coagulate for change pH or particle size significantly during the accelerated aging). Binders passing heat age were also tested for minimum film formation temperature (MFFT) to ensure that pre-crosslinking was not occurring to such an extent that hindered film formation. Table 1 shows the effect of various additives on pressure buildup. MFFTₒ refers to the initial minimum film formation temperature prior to heat aging. D-230 and D-400 refer to Jeffamine D-230 ( z ≅ to 2.5) and D-400 (z ≅ to 6.1) polyetheramines (obtained from Huntsman), which are characterized by the following structure:

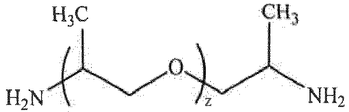

**Table 1 - Effect of Base Additive on Gassing**

| Ex. No. | Additive | (% blinder solids) | Gassing | MFFTₒ | MFFT after 14 d, 60 °C |
|---|---|---|---|---|---|
| Comp. 1 | None | | Failure | 23 °C | NA |
| Comp. 2 | Ethomeen | 2.5 | Failure | 23 °C | NA |
| 1 | D-230 | 1.4 | Pass | 23 °C | 25 °C |
| 2 | D-400 | 2.4 | Pass | 23 °C | 23 °C |

For Examples 1 and 2, the MFFT after heat age testing was substantially the same as the MFFTₒ for the Examples as well as the comparative examples, which shows that the additive does not adversely impact film formation. The examples of the present invention have been found to control pressure building in a paint can. Without the polyetheramine additive, unacceptable pressure buildup occurs and even occurs with the addition of the tertiary amine. It has further been discovered that coatings formulations prepared using the composition of the present invention maintain acceptable performance in the substantial absence of an ammonia neutralizer, preferably in the total absence of an ammonia neutralizer.

## Claims

1. A composition comprising a) an aqueous dispersion of acrylic-based polymer particles functionalized with from 1 to 20 weight percent structural units of an acetoacetoxy functionalized monomer, based on the weight of the polymer particles; and b) an additive which is a compound functionalized with 1 to 4 non-hindered primary amine groups and having a boiling point of at least 250 °C and an equivalent molecular weight of not more than 1100 g/mole; wherein the composition comprises a substantial absence of ammonium cation; the mole:mole ratio of non-hindered primary amine groups to structural units of the acetoacetoxy functionalized monomer is from 0.4 to 5, and the pH of the composition is greater than 7.

2. The composition of Claim 1 wherein the additive is functionalized with 1 to 3 non-hindered primary amine groups and the acetoacetoxy functionalized monomer is an acetoacetoxy-C₁-C₄-alkyl acrylate, an acetoacetoxy-C₁-C₄-alkyl methacrylate, or an acetoacetoxy-C₁-C₄-alkyl acrylamide.

3. The composition of Claim 1 which comprises not more than 0.1 mole of ammonium cation per mole of amine groups in the additive, wherein the additive is a water-miscible polyetheramine.

4. The composition of Claim 3 wherein the water-miscible polyetheramine is represented by any of the following structures: 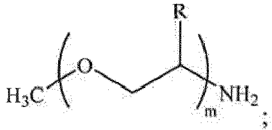 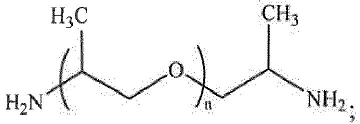 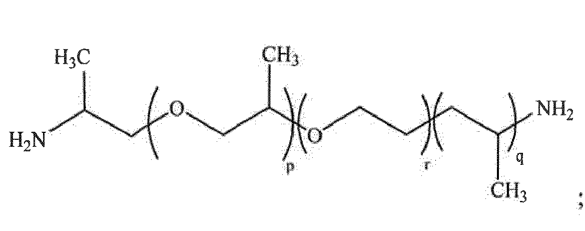 or 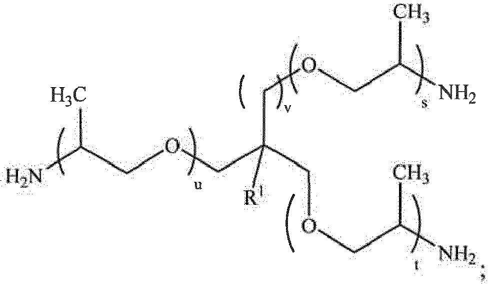
where each R is independently H or methyl;
R¹ is H, methyl, or ethyl;
m is from 4 to 22;
n is from 2 to 40;
p + q is from 1 to 6;
r is from 2 to 13; and
s + t + u is from 5 to 9; and
v is 1 or 2.

5. The composition of Claim 3 wherein the polyetheramine is represented by 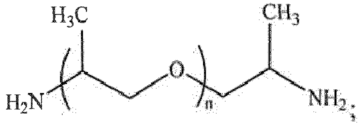 where n is 2 to 7.

6. The composition of Claim 1 wherein the additive is 3,3'-(ethane-1,2-diylbis(oxy))bis(propan-1-amine); 4,9-dioxadodecane-1,12-diamine 4,9-dioxadodecane-1,12-diamine; 4,7-dioxadodecane-1,10-diamine; or 4,7,10-trioxatridecane-1,13-diamine.

7. The composition of any of Claims 1 to 6 which comprises not more than 0.01 mole of ammonium cation per mole of amine groups in the additive.

8. The composition of Claim 7 which comprises less than 0.001 mole of ammonium cation per mole of amine groups in the additive; wherein the acrylic-based polymer particles comprises 1 to 10 weight percent structural units of acetoacetoxyethyl methacrylate; the additive has an equivalent molecular weight of not more than 500 g/mole; the mole:mole ratio of non-hindered primary amine groups to structural units of acetoacetoxyethyl methacrylate is from 0.6 to 2; and the pH of the composition is at least 7.5.

9. The composition of any of Claims 1 to 6 which further includes one or more materials selected from the group consisting of pigments; defoamers; surfactants; dispersants; rheology modifiers; coalescents; and neutralizing agents.

10. A process for forming a CO₂ abating composition comprising the step of contacting an aqueous dispersion of acrylic-based polymer particles functionalized with 1 to 20 weight percent structural units of an acetoacetoxy functionalized monomer, based on the weight of the polymer particles, with an additive which is a compound functionalized with 1 to 4 non-hindered primary amine groups and having a boiling point of at least 250 °C and an equivalent molecular weight of not more than 1100 g/mole to form a CO₂ abating composition; wherein substantially no ammonia or a generator of ammonia is added in the step.
